# NEUE EUROPÄISCHE PATENTSCHRIFT

(11) **EP 1 972 206 B2**
(45) Veröffentlichungstag und Bekanntmachung des Hinweises auf die Entscheidung über den Einspruch: **02.05.2018**
(45) Hinweis auf die Patenterteilung: 01.07.2009
(21) Anmeldenummer: 08004244.3
(22) Anmeldetag: 07.03.2008
(51) Int. Cl.: A23L 5/44, A23L 29/10

(54) **Farbstoff-Emulsion und Emulgatorzusammensetzung sowie deren Verwendung**
Dye emulsion and emulgator compounds and their use
Emulsion de colorant et composition émulsifiante et leur utilisation

(30) Priorität: 14.03.2007 DE 202007003800 U
(43) Veröffentlichungstag der Anmeldung: 24.09.2008
(73) Patentinhaber: Sensient Colors Europe GmbH, 21502 Geesthacht (DE)
(72) Erfinder: Klingenberg, Andreas, Dr., 21465 Reinbek (DE)
(74) Vertreter: RGTH

(56) Entgegenhaltungen:
- EP-A- 0 956 779
- WO-A-2007/026271
- DE-A1-102005 031 467
- US-A1- 2003 129 290
- SCHUBERT ET AL: "Product and Formulation Engineering of Emulsions" CHEMICAL ENGINEERING RESEARCH AND DESIGN, PART A, INSTITUTION OF CHEMICAL ENGINEERS, XX, Bd. 82, Nr. 9, 1. September 2004 (2004-09-01), Seiten 1137-1143, XP022536055 ISSN: 0263-8762

## Beschreibung

Die Erfindung betrifft eine Verwendung einer Farbstoff-Emulsion.

In der Lebensmittelindustrie werden zur Färbung von Nahrungsmitteln seit langem Farbstoffe eingesetzt. Diese, nach ihrem Verwendungszweck als Lebensmittelfarbstoffe bezeichneten Substanzen sind in vielen Fällen jedoch nicht wasserlöslich, sondern fettlöslich. Eine Verwendung fettlöslicher Substanzen in wasserhaltigen Lebensmitteln wie Säften oder Limonaden ist somit nicht ohne weiteres möglich.

Fettlösliche Farbstoffe können jedoch in wasserhaltigen Lebensmitteln in Form von Öl-in-Wasser-Emulsionen emulgiert werden. Dabei bildet die Öl-Phase die dispergierte, während die wässerige Phase die kohärente Phase bildet.

Die optischen Eigenschaften der Lebensmittelfarbstoff-Emulsionen wird wesentlich durch die Größe der Öltröpfchen bestimmt, die in der wässerigen Phase verteilt sind. Aus dem Stand der Technik bekannte Emulsionen von fettlöslichen Farbstoffen in wässerigen Lebensmitteln weisen eine durchschnittliche Partikelgröße von 1 bis 50 Mikrometer auf. Die so erhaltenen Emulsionen besitzen jedoch unbefriedigende optische Eigenschaften. Dies betrifft insbesondere die Transparenz und Leuchtkraft der Emulsionen. Überdies ist die Menge des fettlöslichen Farbstoffes, die benötigt wird, um das wässerige Lebensmittel zu färben, vergleichsweise hoch, da seine Ergiebigkeit gering ist.

Es ist bekannt, fettlösliche Farbstoffe in wasserhaltigen Lebensmitteln in Form von Öl-in-Wasser-Emulsionen zu emulgieren. Dabei bildet die Öl-Phase die dispergierte Phase, während die wässerige Phase die kohärente Phase bildet. Zur Stabilisierung dieser Emulsionen werden Emulgatoren eingesetzt, die eine Phasentrennung verhindern. Mittels der Emulgatoren werden die fettlöslichen Lebensmittelfarbstoffe somit in eine wasserlösliche Form überführt.

Als Emulgatoren werden in Lebensmitteln beispielsweise Lecithin (E 322) oder Zuckerester von Speisefettsäuren (E 473) verwendet.

Die Wahl des Emulgators hängt von den Eigenschaften des Lebensmittels und des fettlöslichen Farbstoffes ab.

Die WO 2007/026271 A offenbart eine stabile Mikroemulsion, die als Emulgatoren Lecithin und Zuckerester von Fettsäuren enthält.

Nach der WO 01/08507 A ist eine Mischung von Emulgatoren für ein Getränk bekannt, die Lecithin und Zuckerester sowie Kaffeeweißer enthält. Des Weiteren bezieht sich die Mischung nicht auf die Emulgierung von Carotinoiden. Kaffeeweißer kann nicht als Farbstoff für ein Lebensmittel angesehen werden; er ist ein Grundstoff, nicht ein Farbstoff.

Aus der WO 2005/122784 A ist eine lebensmitteltaugliche Tinte bekannt, die Lecithin und Sorbitanester als Emulgator enthält. diese lebensmitteltaugliche Tinte ist zum Bedrucken von essbaren Substanzen und ist kein Lebensmittel, sondern die zur Modifizierung (Bedrucken) von Lebensmitteln dient.

Ein Emulgatorsystem, das Lecithin und Zuckerglyceride enthält und mit Ölkörpern stabile Emulsionen bildet ist durch die GB-A-1049335 bekannt. Es geht hier um die Herstellung von Pasten oder Milchprodukten, die Eier enthalten.

Die EP-A-1 270 679 offenbart ein Farbstoffgemisch, das Karotin und einen Emulgator enthalten kann.

Dieser Emulgator ist aus einer Gruppe von Emulgatoren ausgewählt, die aus Lecithin, Polysorbat 80, Lactene und/oder Citrem ausgewählt ist. Eine Kombination aus zwei Emulgatoren ist nicht offenbart.

Nach der GB 918 399 A ist eine wasserdispergierbare Zusammensetzung bekannt, die Lecithin als Emulgator enthält und beispielsweise als Getränkegrundlage geeignet ist. In diesen Zusammensetzungen wird das Karotin nicht durch die in Fruchtsäften vorhandene Ascorbinsäure zerstört.

Karotinoidhaltige Getränke, die Zuckerester mit Fettsäuren als Emulgator enthalten, offenbart die JP 09084566 A. Die hier eingesetzten Farbstoffe weisen eine ausgezeichnete Hitze- und Lichtstabilität auf, ohne durch den pH-Wert beeinflusst zu werden.

Die US-B2-6 635 293 offenbart Karotinoide, die z.B. in Getränken eingesetzt werden und die Emulgatoren, ausgewählt aus Zuckerestern und Lecithin, enthalten.

Die DE 10 2005 031 467 A1 offenbart eine Emulsion, die eine disperse Phase enthält, die eine fettlösliche Substanz, Wasser als kontinuierliche Phase und ein Emulgatorsystem umfasst. Die fettlösliche Substanz kann ein Farbstoff wie β-Carotin sein. Die Carotinoide können gelöst in Öl, bspw. in Sonnenblumenöl vorliegen. Die Herstellung der Emulsion erfolgt mittels eines Hochdruck-Homogenisators. Wobei die Emulsion zum Färben von Getränken verwendet werden kann.

EP 0 956 b779 offenbart eine Emulsion mit einer Emulgatorzusammensetzung, die Lecithin und einen Saccharose-Fettsäureester umfassen kann. Das Gewichtsverhältnis der beiden Emulgatoren beträgt 1 : 2.

Aufgabe der Erfindung ist es, die Nachteile nach dem Stand der Technik zu beseitigen. Es soll eine Farbstoff-Emulsion zur Verwendung in einem Joghurt vorgeschlagen werden, die eine stärkere Leuchtkraft aufweist und eine höhere Ergiebigkeit des Farbstoffes bewirkt.

Diese Aufgabe wird durch die Merkmale des Anspruchs 1 gelöst.

Nach Maßgabe der Erfindung ist eine Verwendung einer Emulsionvorgesehen, die eine in einer wässrigen Phase dispergierte Ölphase aufweist, wobei
- die Ölphase aus einem fettlöslichen Farbstoff gebildet ist und die durchschnittliche Größe der Öltröpfchen aus dem dispergierten Lebensmittelfarbstoff, die die dispergierte Ölphase bilden, 100 nm oder weniger beträgt;
- die Emulsion eine Emulgatorzusammensetzung zur Emulgierung des fettlöslichen Farbstoffes in einem Lebensmittel umfasst, die jeweils bezogen auf das Gewicht der Emulgatorzusammensetzung,
   (a) zwischen 10 und 90 Gew.-% oder zwischen 45 und 55 Gew.-% zumindest eines Lecithins; und
   (b) zwischen 90 und 10 Gew.-% oder zwischen 55 und 45 Gew.-% zumindest eines Saccharoseesters von Fettsäuren,
   umfasst, wobei
   - die Fettsäure aus der Gruppe ausgewählt ist, die Palmitinsäure, Stearinsäure, Ölsäure, Laurinsäure und Erucasäure umfasst;
   - das Lecithin aus der Gruppe ausgewählt ist, die Phosphatidylcholin, Phosphatidylethanolamin und Phosphatidylinosit umfasst;
   - der fettlösliche Farbstoff ein Carotinoid ist; und
   - das Lebensmittel ein Fruchtgetränk oder eine Fruchtzusammensetzung, ein fruchtiges Erfrischungsgetränk, ein fruchtig aromatisiertes Milchprodukt (ohne Ei) oder eine fruchtige Zubereitung an Süßwaren ist, wobei die Emulsion in Joghurt verwendet wird, der 0,5g bis 3g der Emulsion, bevorzugterweise 2,0g der Emulsion, pro kg Joghurt enthält.

Aufgrund der geringeren Größe der Öltröpfchen wird eine bessere Ergiebigkeit des Lebensmittelfarbstoffes erreicht.

Emulsionen mit einer dispergierten Ölphase, deren durchschnittliche Öltröpfchengröße kleiner oder gleich 100nm ist, können mittels an sich bekannter Hochdruck-Homogenisatoren hergestellt werden. Dabei wird eine Rohemulsion oder - suspension beispielsweise mittels einer Drei-KolbenPumpe bei einem Druck von bis zu 1500 bar durch ein Düsensystem gefördert. Extreme Scher- und Dehnungskräfte sorgen für eine effiziente Zerkleinerung und eine enge Tröpfchengrößenverteilung. Eine hochturbulente Mischkammer sorgt für eine Stabilisierung der Tropfen und minimierte störende Koaleszenzeffekte.

Bei dem Lebensmittelfarbstoff handelt es sich um ein Carotinoid. Ein besonders bevorzugter Lebensmittelfarbstoff ist β-Carotin.

Die Emulsion umfasst Emulgatoren zur Stabilisierung der dispersen Ölphase in der wässerigen Phase. Für Nahrungsmittel geeignete Emulgatoren umfassen Lecithin (E 322) oder Zuckerester von Speisefettsäuren (E 473).

Zur Herstellung der Emulsion wird eine Rohemulsion aus einer Ölphase, die den fettlöslichen Farbstoff enthält, und einer kohärenten Wasserphase, in der die Ölphase verteilt ist, bei einem Druck von 300 bis 1500 bar mittels einer Pumpe durch das Düsensystem eines Hochdruck-Homogenisators gefördert. Dabei wird die Rohemulsion unter starken Scher- und Dehnungskräften, wodurch eine effiziente Zerkleinerung der Ölphase in Öltröpfchen und eine enge Tröpfchengrößenverteilung erreicht wird. In der hochturbulenten Mischerkammer des Hochdruck-Homogenisators werden die Öltröpfchen stabilisiert und störende Koalenszenzeffekte minimiert, so dass die Emulsion erhalten wird.

Die Fettsäure ist eine Fettsäure, die aus der Gruppe ausgewählt ist, die Palmitinsäure, Stearinsäure, Ölsäure, Laurinsäure und Erucasäure umfasst. Im Falle eines Zuckerdi- oder - triesters können die veresterten Fettsäuren gleich oder unterschiedlich voneinander sein.

Unter dem Begriff "Lecithin" wird hier eine Substanz gemäß EG-Nummer E 322 (siehe Amt für amtliche Veröffentlichungen der Europäischen Gemeinschaften, CONSLEG: 1996L0077 - 20/11/2003). Danach ist Lecithin als Mischungen oder Fraktionen aus Phosphatiden, die mittels physikalischer Verfahren aus tierischen oder pflanzlichen Nahrungsmitteln gewonnen werden, definiert. Lecithine umfassen auch die hydrolisierten Stoffe, die mit ungefährlichen und geeigneten Enzymen gewonnen werden. Das Enderzeugnis darf keinerlei enzymatische Restaktivität aufweisen. Als Synonyme für Lecithine werden die Begriffe "Phosphatide" und "Phospholipide" verwendet.

Das Lecithin ist aus der Gruppe ausgewählt, die Phosphatidylcholin, Phosphatidylethanolamin und Phosphatidylinosit umfasst. Stärker bevorzugt ist das Lecithin Phosphatidylcholin.

Der fettlösliche Farbstoff ist ein Carotinoid. Das Carotinoid kann aus der Gruppe gewählt sein, die Bixin, Capsanthin, Capsorubin, Lutein, Rhodoxanthin und Kombinationen dieser umfasst.

Vorzugsweise enthält die Emulgatorzusammensetzung keine weiteren Bestandteile, sondern besteht lediglich aus dem zumindest einen Lecithin und dem zumindest einen Zuckerester von Fettsäuren.

Nach einer bevorzugten Ausführungsform umfasst die Emulgatorzusammensetzung Lecithin gemäß E 322 und Zuckerestem von Speisefettsäuren gemäß E 473.

Die Erfindung wird nachfolgend anhand von Beispielen unter Bezugnahme auf die Zeichnungen näher erläutert.
Dabei zeigt:

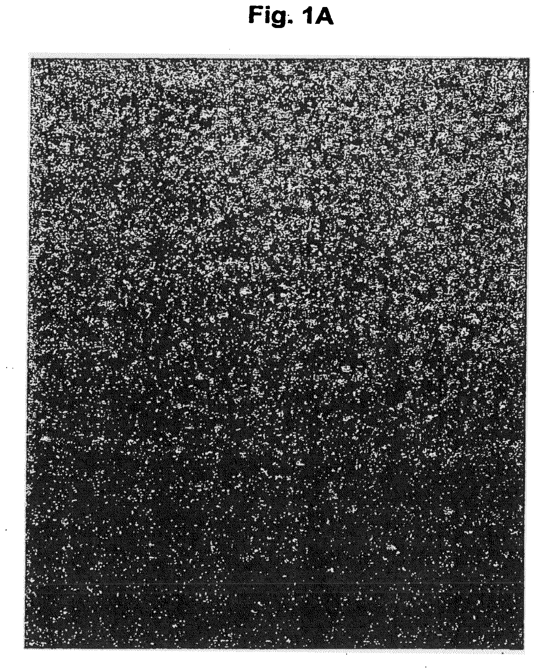

Fig. 1A eine Carotin-Emulsion nach dem Stand der Technik mit einer Partikelgröße von etwa 1 mµ; und

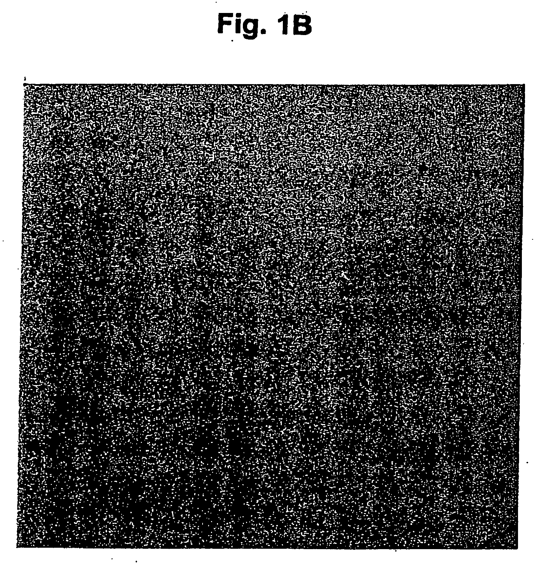

Fig. 1B eine Carotin-Mikroemulsion.

Die gemäß der Erfindung verwendete Emulsion wird nachfolgend auch als Mikroemulsion bezeichnet.

### Beispiele

### Vergleichsbeispiel 1: Öl-in-Wasser-Emulsion mit 1 Gew.-% Beta-Carotin

Zur Herstellung einer Vergleichsemulsion mit einer dispersen Beta-Carotin-haltigen Ölphase und einer kohärenten Wasserphase wurden die nachstehenden angegebenen Ausgangsstoffe bereitgestellt. Die prozentualen Angaben beziehen sich auf die Gesamtrezeptur der Vergleichsemulsion:

### (1) Ölphase:

| | |
|---|---|
| Lecithin E-322 | 2 Gew.-% |
| Beta-Carotin (kristallin) E-160a | 1 Gew.-% |
| Sonnenblumenöl | 10 Gew.-% |
| Ascorbylpalmitat E-304 | 1 Gew.-% |
| Tocopherol E-307 | 1 Gew.-% |

Die Komponenten werden vermischt und bis zu einer Temperatur von 140 °C erhitzt, bis sämtliche Carotinkristalle in der Ölphase gelöst sind.

### (2) Wasserphase:

| | |
|---|---|
| Zuckerester E-473 | 2 Gew.-% |
| Sorbitolsirup 70% E-420 | 77 Gew.-% |
| Demineralisiertes Wasser | 6 Gew.-% |

Die Komponenten wurden unter Rühren vermischt und auf 80 °C erwärmt

### (3) Verrühren und Homogenisieren der Rohemulsion:

Anschließend wurde die Ölphase auf ca. 80 °C abgekühlt und unter Rühren der Wasserphase bei 80 °C zugesetzt. Nach der Zugabe der Ölphase in die Wasserphase wurde das Gemisch über ein Disperierungssystem und ein herkömmliches Hochdruck-Homogenisiersystem bei ca. 300 bar bis zu einer Partikelgröße der Öltröpfchen von 90 % ca. 1 mm dispergiert. Fig. 1a zeigt eine mikroskopische Aufnahme der Vergleichsemulsion mit einer Partikelgröße von ca. 1 Pm.

### Beispiel 1: Mikroemulsion

Die Mikroemulsion wurde wie im Vergleichsbeispiel hergestellt, außer dass ein Hochdruck-Homogenisator mit einer hochturbulenten Mischkammer und Druckstufen bis 1000 bar zur homogenen Emulgierung der Ölphase in der Wasserphase verwendet wurden. Es wurde eine Teilchengröße der Ölphase von 90 % unter 100 nm erreicht. Fig. 1b zeigt eine mikroskopische Aufnahme der erfindungsgemäßen Mikroemulsion mit einer Partikelgröße von ca. 100 bis 80 nm.

Die Emulsion und die Vergleichsemulsion wurden in folgender Anwendung bewertet:

### Beispiel 2: Ausmischung in einer Joghurtbasis

In einer Joghurtbasis wurden die Vergleichsemulsion (Vergleichsjoghurt) oder die Mikroemulsion (Beispieljoghurt) ausgemischt und hinsichtlich Farbkraft beurteilt.

Als Joghurtbasis wurde ein Naturjoghurt mit 3,5 % Fett verwendet. Bei dem Vergleichsjoghurt wurden 2 g/kg der Vergleichsemulsion, bei dem Beispieljoghurt 2 g/kg der Mikroemulsion jeweils über 30 Minuten bei Raumtemperatur zugemischt.

### (a) Vergleichende Beurteilung der Leuchtkraft und Ergiebigkeit

Der Vergleichsjoghurt wies eine Farbintensität des gelben Carotins von b: 29 auf, während der Beispieljoghurt eine Farbintensität von b: 32 ergab. Damit wurde die Leuchtkraft und Ergiebigkeit um ca. 10 % durch die Anwendung der Mikroemulsion gesteigert.

## Patentansprüche

1. Verwendung einer Emulsion, die eine in einer wässerigen Phase dispergierte Ölphase aufweist, wobei
- die Ölphase aus einem fettlöslichen Farbstoff gebildet ist und die durchschnittliche Größe der Öltröpfchen aus dem dispergierten Lebensmittelfarbstoff, die die dispergierte Ölphase bilden, 100 nm oder weniger beträgt;
- die Emulsion eine Emulgatorzusammensetzung zur Emulgierung des fettlöslichen Farbstoffes in einem Lebensmittel umfasst, die jeweils bezogen auf das Gewicht der Emulgatorzusammensetzung,
(a) zwischen 45 und 55 Gew.-% zumindest eines Lecithins; und
(b) zwischen 55 und 45 Gew.-% zumindest eines Saccharoseesters von Fettsäuren,
umfasst, wobei
- die Fettsäure aus der Gruppe ausgewählt ist, die Palmitinsäure, Stearinsäure, Ölsäure, Laurinsäure und Erucasäure umfasst;
- das Lecithin aus der Gruppe ausgewählt ist, die Phosphatidylcholin, Phosphatidylethanolamin und Phosphatidylinosit umfasst;
- der fettlösliche Farbstoff ein Carotinoid ist; und
- das Lebensmittel ein Fruchtgetränk oder eine Fruchtzusammensetzung, ein fruchtiges Erfrischungsgetränk, ein fruchtig aromatisiertes Milchprodukt ohne Ei oder eine fruchtige Zubereitung an Süßwaren ist,
wobei die Emulsion in Joghurt verwendet wird, der 0,5 bis 3 g der Emulsion, bevorzugterweise 2,0 g der Emulsion, pro kg Joghurt enthält.

## Claims

1. Use of an emulsion which has an oil phase dispersed in an aqueous phase,
wherein
- the oil phase is formed by a liposoluble colourant and the mean size of the oil droplets from the dispersed food colourant which form the dispersed oil phase is 100 nm or less;
- the emulsion comprises an emulsifying agent composition for emulsifying the liposoluble colourant in a foodstuff, said emulsifying agent composition comprising, each with respect to the weight of the emulsifying agent composition,
(a) between 45 and 55% in weight of at least one lecithin; and
(b) between 55 and 45% in weight of at least one saccharose ester of fatty acids,
wherein
- the fatty acid is selected from the group which comprises palmitin acid, stearin acid, oil acid, laurinic acid and eruca acid;
- the lecithin is selected from the group which comprises phosphatidycholine, phosphatidylethanolamine and phosphatidylinosite;
- the liposoluble colourant is a carotenoid; and
- the foodstuff is a fruit drink or a fruit composition, a fruit refreshing drink, an eggless milk product with fruit aroma or a fruit preparation of sweets.
wherein the emulsion is used in yoghurt which contains 0,5 to 3,0 g of the emulsion, preferably 2,0 g of the emulsion, per kg yoghurt.

## Revendications

1. Utilisation d'une émulsion comportant une phase huileuse dispersée dans une phase aqueuse,
- la phase huileuse étant formée à partir d'un colorant liposoluble, et la grandeur moyenne des gouttelettes du colorant alimentaire en dispersion qui forment la phase huileuse dispersée étant inférieure ou égale à 100 nm ;
- l'émulsion comprenant une composition d'émulsifiant destinée à émulsifier le colorant liposoluble dans un aliment laquelle comprend, toujours par rapport au poids de la composition d'émulsifiant,
(a) entre 45 et 55 % en poids d'au moins une lécithine ; et
(b) entre 55 et 45 % en poids d'au moins un ester de saccharose d'acides gras,
- l'acide gras étant choisi dans le groupe comprenant l'acide palmitique, l'acide stéarique, l'acide oléique, l'acide laurique et l'acide érucique ;
- la lécithine étant choisie dans le groupe comprenant la phosphatidylcholine, la phosphatidyléthanolamine et le phosphatidylinositol ;
- le colorant liposoluble étant un caroténoïde ; et
- l'aliment étant une boisson à base de fruits ou une composition à base de fruits, une boisson rafraîchissante fruitée, un produit laitier aromatisé aux fruits sans oeufs ou une préparation fruitée de confiseries,
l'émulsion étant utilisée dans du yaourt, ce dernier contant 0,5 à 3 g de ladite émulsion, de préférence 2,0 g de ladite émulsion, par kg de yaourt.
